# EUROPEAN PATENT APPLICATION

(11) **EP 4 756 258 A1**
(43) Date of publication of application: **10.06.2026**
(21) Application number: 25218021.1
(22) Date of filing: 24.11.2025
(51) Int. Cl.: F16H 57/04

(54) **LUBRICATING OIL DISTRIBUTOR FOR A MECHANICAL DEVICE EQUIPPED WITH BEARINGS, IN PARTICULAR A DIFFERENTIAL AND DIFFERENTIAL COMPRISING THE DISTRIBUTOR**

(30) Priority: 06.12.2024 IT 202400027708
(71) Applicant: FPT Industrial S.p.A., 10156 Torino (IT)
(72) Inventor: DILEO, Gennaro, 10156 Torino (IT); CANTONE, Francesco, 10156 Torino (IT); COLACITO, Emanuele, 10156 Torino (IT); PETRUCCI, Andrea, 10156 Torino (IT); NALIN, Patrizia, 10156 Torino (IT); FASOLO, Loris, 10156 Torino (IT); TESSITORE, Marco, 10156 Torino (IT)
(74) Representative: Fiume, Orazio

(57) **Abstract**

Lubricating oil distributor (OD) for a mechanical device equipped with bearings and gear wheels comprising a bell (B) defined by a roughly flat base (F) and an annular lip (L) attached to the perimeter of a face (Fl) of the base, wherein the base is equipped with a central opening (CH), an annular reservoir (RS) attached to the face (Fl) intermediately between the central opening and the lip, wherein the reservoir has an inlet opening (IN) and an outlet opening (OUT), and a bracket (S) attached to said face of the base at said inlet opening.

## Description

### Field of the invention

The present invention relates to the field of lubrication systems for mechanical devices equipped with bearings, in particular a differential.

### State of the art

Lubrication of a mechanical device is essential to ensure its longevity and reliability.

Furthermore, it is difficult to lubricate multiple components within a complex device.

In a differential, oil must be supplied to both the support bearings of the rotating components, such as the axle shafts, and to the planetary gears of the differential itself.

Unless specifically excluded in the detailed description below, the information provided in this chapter is to be considered an integral part of the detailed description.

### Summary of the invention

The purpose of the present invention is to provide an oil distributor capable of accumulating oil and distributing it along two distinct paths.

The basic idea of this invention is to create a bell-shaped component with a flat bottom, an annular lip, and a central through-hole. The bell contains, intermediate between the central opening and the lip, an annular reservoir with an inlet opening and a bracket designed to divide a total flow of oil impacting the bracket into two flows, one directed into the reservoir inlet opening, and the other directed into the lip.

The lip is positioned proximal to a planetary gear carrier bearing, so as to direct the second flow onto the bearing. A collar delimits the central opening and is arranged to fit onto a driveshaft and direct the oil accumulated in the reservoir along the driveshaft toward the planetary gear supported by the driveshaft itself and the planetary gears supported by the planetary gear carrier.

The planetary carrier is associated with a ring gear to receive motion from a prime mover and at least one pair of planetary gears arranged to mesh on fixed planetary gears with the differential half-shafts.

Advantageously, this solution allows the oil to be distributed along two distinct paths.

Furthermore, the presence of a storage reservoir coupled to the cup-shaped outlet allows the bearing to be bypassed, ensuring efficient lubrication of the differential.

The dependent claims describe preferred variants of the invention and form an integral part of this specification.

### Brief description of the figures

Further purposes and advantages of the present invention will become clear from the following detailed description of an embodiment thereof (and variations thereof) and the accompanying drawings, provided purely for explanatory and non-limiting purposes, in which:
- Fig. 1 shows an oil distributor of the present invention according to a side view of a longitudinal section of the distributor schematically coupled to a differential;
- Fig. 2 shows the distributor of Fig. 1, according to a perspective view.

The same reference numbers and letters in the figures identify the same elements or components or functions.

It should also be noted that the terms "first," "second," "third," "upper," "lower," and the like may be used herein to distinguish various elements. These terms do not imply a spatial, sequential, or hierarchical order for the modified elements unless specifically indicated or inferred from the text.

The elements and features illustrated in the various preferred embodiments, including the drawings, may be combined with each other without departing from the scope of protection of this application as described below.

### Detailed description of preferred embodiments

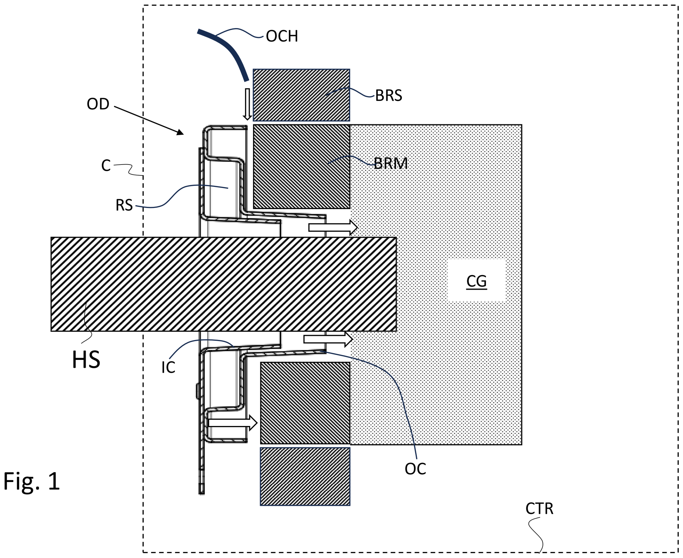

Referring to Fig. 1, a lubricating oil distributor OD is shown for a mechanical device equipped with at least one bearing and gear wheels.

As described below, a differential comprises at least one bearing fitted annularly on a half-shaft to support a corresponding planetary carrier.

The planetary gears are gear wheels.

The distributor comprises a bell B defined by a flat base F and an annular lip L attached to the perimeter of a face F1 of the base, in which the base has a central opening CH. The bell by definition is cylindrically symmetrical, and therefore its base is circular.

An annular reservoir RS is attached to face F1 at an intermediate position between the central opening and the lip, in which the reservoir has an inlet opening IN and an outlet opening OUT.

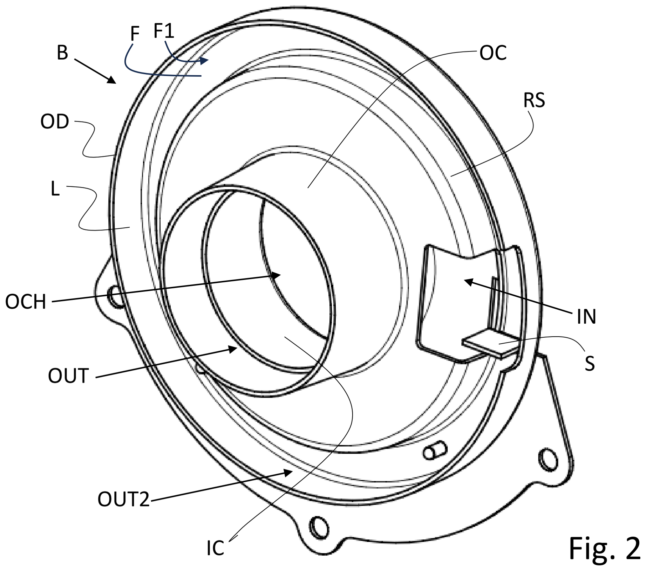

A bracket S is attached to face F1 of the base at the inlet opening. More specifically, as shown in Fig. 2, the bracket S is positioned externally to the reservoir RS between the lip L and the inlet opening IN.

As shown in the figure, the bracket is oriented along a radial axis of said base F. The outlet opening is defined by an annular collar, positioned on face F1 of the base to delimit the central opening.

Both the collar and the lip emerge perpendicular to said face. The collar comprises an external cylinder OC and an internal cylinder IC arranged coaxially with each other, attached to said annular reservoir, delimiting a corresponding annular opening of the annular reservoir, so as to define an annular duct, see Fig. 1.

The differential comprises a half-shaft HS having a first end to which a first planetary gear is fixed, a planetary carrier CG rotatably supporting at least a second planetary gear meshing with the first planetary gear, and a bearing BRS, BRM, for example a needle roller bearing, annular with respect to the half-shaft HS and comprising a fixed portion BRS planted in a crankcase CTR and a movable part rotatably fixed to the fixed part and supporting the planet carrier. According to the present invention, the differential comprises the oil distributor OD and a lubricating oil channel OCH arranged so that, under operating conditions, a total flow of lubricating oil carried by the oil channel strikes said bracket S approximately perpendicularly. Preferably, under operating conditions, the channel is approximately vertical and the bracket is approximately horizontal.

The bracket is arranged so as to divide said total oil flow into a first flow entering the annular reservoir through said inlet opening and a second flow collected by said lip L.

The lip has a diameter similar to the bearing diameter and in which the lip faces the bearing to lubricate it with said second flow.

Advantageously, the lip lubricates the bearing, while the collar lubricates the wheels, i.e., the differential planetary gears.

Embodiment variations to the non-limiting example described are possible, without departing from the scope of protection of the present invention, including all embodiments equivalent to the content of the claims for a person skilled in the art.

From the above description, a person skilled in the art is able to realize the object of the invention without introducing further construction details.

## Claims

1. Lubricating oil dispenser (OD) for a mechanical device equipped with bearings and gear wheels, comprising:
- a bell (B) defined by an approximately flat base (F) and an annular lip (L) attached to the perimeter of a face (F1) of the base, wherein the base is equipped with a central through opening (CH),
- an annular reservoir (RS) attached to the face (F1) at an intermediate position between the central opening and the lip, wherein the reservoir has a lateral inlet opening (IN) and an outlet opening (OUT),
- a bracket (S) attached to said face (F1) of the base at said inlet opening.

2. The dispenser according to claim 1, said outlet opening being defined by an annular collar, arranged on said face (F1) of the base to delimit the central opening.

3. The dispenser according to claim 2, wherein said collar comprises an external cylinder (OC) and an internal cylinder (IC) arranged coaxially with each other, attached to said annular reservoir, delimiting a relative annular opening of the annular reservoir, so as to define an annular duct.

4. The dispenser according to any of the preceding claims, wherein said lip and said collar emerge perpendicular to said face (F1).

5. The dispenser according to any of the preceding claims, wherein the bracket (S) is arranged externally of the reservoir (RS) between the lip (L) and said inlet opening (IN).

6. The dispenser according to any of the preceding claims, wherein the bracket is oriented along a radial axis of said base (F).

7. Differential comprising a half-shaft (HS) having a first end to which a first planet is fixed, a planet carrier (CG) rotatably supporting at least one second planet meshing with said first planet and a bearing (BRS, BRM) annular with respect to said half-shaft (HS) and comprising a fixed portion (BRS) planted in a crankcase (CTR) and a movable part rotatably associated with the fixed part and supporting the planet carrier, the differential comprising the oil distributor according to any of claims 1 - 3 and a lubricating oil channel (OCH) arranged so that, under operating conditions, a total flow of lubricating oil carried by the oil channel strikes said bracket (S) approximately perpendicularly.

8. Differential according to claim 7, wherein said bracket is arranged so as to divide said total flow of oil into a first flow entering the annular reservoir through said inlet opening and a second flow collected by said lip (L).

9. A differential according to claim 8, wherein the lip has a diameter similar to a diameter of the bearing and wherein the lip faces the bearing to lubricate it with said second flow.
